Europäisches Patentamt

European Patent Office

Office européen des brevets

(11) Publication number : **0 668 316 A2**

# EUROPEAN PATENT APPLICATION

(21) Application number : **95301034.5**

(22) Date of filing : **17.02.95**

(51) Int. Cl.$^6$ : **C08L 27/06, C08K 3/00,
// (C08K3/00, 3:16, 3:26)**

(30) Priority : **18.02.94 JP 21348/94**

(43) Date of publication of application :
**23.08.95 Bulletin 95/34**

(84) Designated Contracting States :
**BE DE FR GB IT NL**

(71) Applicant : **SUMITOMO CHEMICAL
COMPANY, LIMITED
5-33, Kitahama 4-chome
Chuo-ku
Osaka (JP)**

(72) Inventor : **Shimizu, Hikaru
13-18 Utajima-1-chome
Nishiyodogawa-ku, Osaka-shi (JP)**
Inventor : **Igarashi, Toshio
59 Shimogamo Miyazakicho
Sakyo-ku, Kyoto-shi (JP)**
Inventor : **Wakatsuki, Akira
5-1 Wakamizucho-1-chome
Niihama-shi (JP)**
Inventor : **Nakatsuji, Yoshihiro
10-3-310 Sonehigashinocho-2-chome
Toyonaka-shi (JP)**
Inventor : **Shida, Yuu
33-2 Kangetsucho-1-chome
Chikusa-ku, Nagoya-shi (JP)**

(74) Representative : **Ablewhite, Alan James
MARKS & CLERK,
57/60 Lincoln's Inn Fields
London WC2A 3LS (GB)**

(54) **Poly (vinyl chloride) resin composition and process for producing the same.**

(57) A poly(vinyl chloride) resin composition which contains a poly(vinyl chloride) resin and either hydrotalcites treated with perchloric acid or a mixture of at least two compounds selected from hydrotalcites treated with perchloric acid, hydrotalcites untreated with perchloric acid and a perchlorate but is free from organotin compounds and zinc, cadmium and lead salts of an organic acid is superior in thermal stability in processing, resistance to amines and hygienic safety.

EP 0 668 316 A2

FIELD OF THE INVENTION

The present invention relates to a poly(vinyl chloride) resin composition. In more particular, it relates to a poly(vinyl chloride) resin composition good in thermal stability in processing and resistance to amines. In still more particular, it relates to a poly(vinyl chloride) resin composition being free from organotin compounds, zinc, cadmium and lead salts of organic acids and good in thermal stability in processing, resistance to amines and hygienic safety.

BACKGROUND OF THE INVENTION

Poly(vinyl chloride) resins, though having good flame resistance, chemical resistance and other good properties, are poor in thermal stability. That is, the resins are apt to undergo thermal decomposition due to dehydrohalogenation caused by heat and other factors in processing, which can result in undesirable color development of products and deterioration of their mechanical properties. To overcome these problems, it has been proposed to compound various metal salts of organic acids or organotin compounds into poly(vinyl chloride) resins.

However, though cadmium salts or lead salts of organic acids increase the thermal stability of poly(vinyl chloride) resins, they are not satisfactory from the viewpoint of hygienic safety. Organotin compounds also are not satisfactory in points of hygienic safety and oder. Consequently, there have been commonly used mixtures of metal salts of organic acids comprising organic acid zinc salts as the main constituent, for example, mixtures of organic acid barium salts and zinc salts, mixtures of organic acid calcium salts and zinc salts, and mixtures of organic acid barium salts, calcium salts and zinc salts.

On the other hand, when a poly(vinyl chloride) resin layer is used with a backing of polyurethane as in the case of interior finishing materials for automobiles, there arises a problem of the amine compound used as the catalyst in producing the polyurethane promoting the deterioration of the poly(vinyl chloride) resin. In order to improve resistance to amines, therefore, the use of stabilizer mixtures has been proposed which contain perchlorates in addition to the above-mentioned mixtures of organic acid metal salts.

For example, there have been proposed poly(vinyl chloride) resin compositions containing organic acid zinc salts, barium salts and liquid complex compounds of perchloric acid metal salts (JP-A-61-231041), and poly(vinyl chloride) resin compositions containing organic acid zinc salts and barium salts, perchloric acid metal salts and/or perchlorate ion type hydrotalcites (JP-A-62-270645 and JP-A-4-173854).

However, these compositions are still not fully satisfactory in resistance to amines, though they show a good thermal stability in processing.

Accordingly, a poly(vinyl chloride) resin composition which has a more enhanced resistance to amines is eagerly awaited.

SUMMARY AND OBJECT OF THE INVENTION

In view of the circumstances, the present inventors have made extensive study to develop a poly(vinyl chloride) resin composition which has a good thermal stability in processing and moreover has a more enhanced resistance to amines. As the result, it has been found that the zinc salts of organic acids, added for imparting thermal stability to poly(vinyl chloride) resin, causes, on the other hand, the deterioration of resistance to amines and further that when hydrotalcites treated with perchloric acid (hereinafter referred to as treated hydrotalcites) wherein the ratio of the perchlorate anions to the carbonate anions falls within a specified range is used, the resistance to amines of the resulting resin composition can be improved without lowering the thermal stability in processing even when no metal salt of organic acid is added to the composition. The present invention has been accomplished based on the above finding and additional investigations.

Thus, according to the present invention, there are provided a poly(vinyl chloride) resin composition which comprises:

(A) a poly(vinyl chloride) resin, and
(B) a component selected from the group consisting of:
    (B-1) hydrotalcites treated with perchloric acid, and
    (B-2) a mixture of at least two compounds selected from the group consisting of hydrotalcites treated with perchloric acid, hydrotalcites untreated with perchloric acid and a perchlorate,
    the weight ratio of the perchlorate anion to the carbonate anion in the composition falling within the range of from 1.6:1 to 30:1, and
    the composition being free from organotin compounds and zinc, cadmium and lead salts of an organic acid; and

2

a method for producing a poly(vinyl chloride) resin composition which comprises the steps of:
(a) mixing
(A) a poly(vinyl chloride) resin, and
(B) a component selected from the group consisting of:
(B-1) hydrotalcites treated with perchloric acid, and
(B-2) a mixture of at least two compounds selected from the group consisting of hydrotalcites treated with perchloric acid, hydrotalcites untreated with perchloric acid and a perchlorate, and
(b) mixing none of organotin compounds and zinc, cadmium and lead salts of an organic acid.

DETAILED DESCRIPTION OF THE INVENTION

The poly(vinyl chloride) resin used in the present invention may be, for example, vinyl chloride homopolymers; copolymers of vinyl chloride and at least one monomer copolymerizable therewith, e.g., vinyl chloride-vinyl acetate copolymers, vinyl chloride-ethylene copolymers, vinyl chloride-propylene copolymers, vinyl chloride-isobutylene copolymers, vinyl chloride-styrene copolymers, vinyl chloride-vinylidene chloride copolymers, vinyl chloride-butadiene copolymers, vinyl chloride-acrylic ester copolymers, vinyl chloride-maleic ester copolymers, vinyl chloride-methacrylic ester copolymers, vinyl chloride-acrylonitrile copolymers, vinyl chloride-styrene-maleic anhydride terpolymers, vinyl chloride-vinylidene chloride-vinyl acetate terpolymers, vinyl chloride-styrene-acrylonitrile terpolymers and vinyl chloride graft copolymers on ethylene-vinyl acetate copolymers; and the mixtures thereof.

The hydrotalcites untreated with perchloric acid (hereinafter referred to as untreated hydrotalcites) used in (B-2) in the present invention are represented by the following formula (I).

$$[M^{2+}_{1-x} M^{3+}_x(OH^-)_2]^{x+}[(CO_3^{2-})_{x/2} \cdot mH_2O]^{x-} \qquad (I)$$

wherein $M^{2+}$ is a divalent metal ion, $M^{3+}$ is a trivalent metal ion, m is a positive number and x is a positive number not greater than 0.33.

The divalent metal ion $M^{2+}$ may be, for example, $Mg^{2+}$, $Mn^{2+}$ and $Fe^{2+}$, and the trivalent metal ion $M^{3+}$ may be, for example, $A\ell^{3+}$, $Fe^{3+}$ and $In^{3+}$. Usually those compounds wherein $M^{2+}$ is $Mg^{2+}$ and $M^{3+}$ is $A\ell^{3+}$ are employed.

The perchlorates in (B-2) may be metal salts and ammonium salts. The metal salts may be, for example, sodium salt, potassium salt, barium salt and magnesium salt. These perchlorates may be either an anhydride or a hydrate. They may be used either in the form of solid or after dissolved in a solvent, such as alcohols, glycols, esters and ketones.

The treated hydrotalcites in (B-1) or (B-2) refer to a compound having the structure of the formula (I) wherein all or part of the carbonate anions have been replaced by perchlorate anions. Usually the compound may be easily prepared by adding the above-mentioned hydrotalcites to a dilute aqueous solution of perchloric acid and stirring the resulting mixture or adding a concentrated aqueous solution of perchloric acid to the untreated hydrotalcites and stirring the mixture, then followed, if necessary and desired, by filtration, dehydration or drying. The compound may also be prepared by contacting the untreated hydrotalcites with a solution of such perchlorates as mentioned above.

In the present invention, the treated hydrotalcites may be used either singly or in combination with untreated hydrotalcites and/or a perchlorate. It is also possible to use only untreated hydrotalcites and perchlorates without using treated hydrotalcites.

In any of the above cases, the weight ratio of the perchlorate anion to the carbonate anion in the resin composition must be in the range of 1.6:1 to 30:1. When the weight ratio of the perchlorate anion to the carbonate anion is less than 1.6, the resistance to amines of the resin composition is insufficient, whereas when the ratio is more than 30, the thermal stability in processing is unsatisfactory.

When the treated hydrotalcites are used singly, the weight ratio of the perchlorate anion to the carbonate anion therein preferably falls within the range of 1.6:1 to 30:1.

For example, treated hydrotalcites containing perchlorate anion and carbonate anion in a weight ratio of 1.6:1 can be obtained by contacting untreated hydrotalcites of formula (I) with an aqueous solution of perchloric acid containing perchlorate anion of which the number of mole is 0.66 times that of the carbonate anion in the untreated hydrotalcites, whereby 33% by mole of the carbonate anion in the untreated hydrotalcites is replaced by twice the number of mole of the perchlorate anion.

The number of mole of the carbonate anion replaced by the perchlorate anion can be controlled by changing the content of the perchlorate anion in the aqueous solution of perchloric acid. For example, in the above procedure, changing the number of mole of the perchlorate anion contained in the aqueous solution of perchloric acid to 1.8 times that of the carbonate anion enables the production of treated hydrotalcites containing perchlorate anion and carbonate anion in a weight ratio of 30:1.

3

That is, treated hydrotalcites in which the weight ratio of the perchlorate anion to the carbonate anion fails within the range of from 1.6:1 to 30:1 can be produced by contacting untreated hydrotalcites with an aqueous solution of perchloric acid containing perchlorate anion of which the weight falls within the range of from 1.1 to 3.0 times that of the carbonate anion in the untreated hydrotalcites.

When treated hydrotalcites are used in combination with untreated hydrotalcites and/or a perchlorate, the treated hydrotalcites may be either the one wherein part of the carbonate anion in the formula (I) has been replaced by perchlorate anion or the one wherein all of the carbonate anion has been replaced. In such cases, the proportions of the respective constituents are preferably determined so that the component (B-2) as a whole may have a weight ratio of the perchlorate anion to the carbonate anion in the range of 1.6:1 to 30:1.

It is also possible to use as component (B-2) solely the combination of untreated hydrotalcites and a perchlorate, without using treated hydrotalcites. In this case, also, the proportions of the two constituents are preferably determined so as to give a weight ratio of the perchlorate anion to the carbonate anion in the resin composition within the range of 1.6:1 to 30:1.

The perchlorate anion content in the poly(vinyl chloride) resin composition of the present invention is to be set preferably at 0.2-3 parts by weight, more preferably at 0.3-1.5 parts by weight, in terms of $ClO_4$, per 100 parts by weight of poly(vinyl chloride) resin.

The carbonate anion content in the composition is to be set preferably at 0.02-3 parts by weight, more preferably at 0.05-0.5 part by weight, in terms of $CO_3$, per 100 parts by weight of poly(vinyl chloride) resin.

The resin composition of the present invention may be incorporated with additives conventionally used for poly(vinyl chloride) resin compositions, e.g., stabilizers, plasticizers and other compounding ingredients, than organotin compounds, and zinc cadmium and lead salts of an organic acid.

The organic acid referred to herein are mainly carboxylic acids and phenols.

Examples of the carboxylic acids include monobasic carboxylic acids, such as acetic acid, propionic acid, butyric acid, valeric acid, caproic acid, enanthic acid, caprylic acid, pelargonic acid, 2-ethylhexoic acid, neodecanoic acid, capric acid, undecanoic acid, lauric acid, tridecanoic acid, myristic acid, palmitic acid, isostearic acid, stearic acid, 12-hydroxystearic acid, behenic acid, montanic acid, benzoic acid, monochlorobenzoic acid, p-tert-butylbenzoic acid, dimethylhydroxybenzoic acid, 3,5-di-tert-butyl-^4-hydroxybenzoic acid, toluic acid, dimethylbenzoic acid, ethylbenzoic acid, cuminic acid, n-propylbenzoic acid, aminobenzoic acid, N,N-dimethylaminobenzoic acid, acetoxybenzoic acid, salicylic acid, p-tert-octylsalicylic acid, elaidic acid, oleic acid, linolic acid, linolenic acid, thioglycolic acid, mercaptopropionic acid, and octylmercaptopropionic acid; dibasic carboxylic acids, such as oxalic acid, malonic acid, succinic acid, glutaric acid, adipic acid, pimelic acid, suberic acid, azelaic acid, sebacic acid, phthalic acid, isophthalic acid, terephthalic acid, hydroxyphthalic acid, chlorophthalic acid, aminophthalic acid, maleic acid, fumaric acid, citroconic acid, metaconic acid, itaconic acid, aconitic acid, and thiodipropionic acid, and monoesters and monoamide compounds thereof; tribasic or tetrabasic carboxylic acids, such as butanetricarboxylic acid, butanetetracarboxylic acid, hemimellitic acid, trimellitic acid, mellophanic acid and pyromellitic acid, and di- or triester compounds thereof.

Examples of the phenols include phenol, cresol, xylenol, methylpropylphenol methyl-tert-octylphenol, ethylphenol, isopropylphenol, tert-butylphenol, n-butylphenol, diisobutylphenol, isoamylphenol, diamylphenol, isohexylphenol, octylphenol, isooctylphenol, 2-ethylhexylphenol, tert-octylphenol, nonylphenol, dinonylphenol, tert-nonylphenol, decylphenol, dodecylphenol, octadecylphenol, cyclohexylphenol and phenylphenol.

Examples of the organotin compounds include dibutyltin laurate, dioctyltin laurate, dibutyltin maleate, dioctyltin maleate, dibutyltin mercaptoacetate, monobutyltin mercaptoacetate, dibutyltin isooctylthioglycolate, monobutyltin isooctylthioglycolate, dioctyltin mercaptoacetate, monooctyltin mercaptoacetate, dioctyltin isooctylthioglycolate and monooctyltin isooctylothioglycolate.

Specific examples of the additives which can be used in the resin compostion of the present invention are as follows.

For example, organic phosphites may be used, whereby the thermal stability in processing can be increased further.

Examples of suitable organic phosphites include trialkyl phosphites, such as tributyl phosphite and triisooctyl phosphite; triaryl phosphites, such as triphenyl phosphite and tris(nonylophenyl) phosphite; alkyl aryl phosphites, such as monooctyl diphenyl phosphite and dioctyl monophenyl phosphite; oligo phosphites, such as tetra-mixed alkyl ($C_{12}$-$C_{15}$)-4,4'-isopropylidenephenyl diphosphite and distearyl pentaerythritol diphosphite; and azide phosphites, such as dibutyl azide phosphite and dilauryl azide phosphite.

The organic phosphite is used in an amount of usually about 0.01-5 parts by weight, preferably about 0.1-1 part by weight, per 100 parts by weight of poly(vinyl chloride) resin.

Further, there may be used organic acid metal salts other than zinc salts, lead salts and cadmium salts, e.g., lithium salts, sodium salts, barium salts, calcium salts and magnesium salts of carboxylic acids, phenols or organic phosphoric acids; epoxy compounds, e.g., epoxydized soybean oil, epoxidized linseed oil, epoxidized castor oil, bisphenol a glycidyl ether and epoxydized polybutadiene; polyhydric alcohols, e.g., pentaerythritol, dipentaerythritol, mannitol and glycerol; and β-diketo compounds, e.g., stearoylbenzoylmethane, dibenzoylmethane and benzoylacetone.

Stabilizers as antioxidants, ultraviolet absorbers, light stabilizers, and the like may also be used.

Examples of plasticizers used include dialkyl phthalates wherein the alkyl groups each have 9-11 carbon atoms, such as diisodecyl phthalate and diisoundecyl phthalate; trialkyl trimellitates wherein the alkyl groups each have 7-11 carbon atoms, such as trioctyl trimellitate, tri-2-ethylhexyl trimellitate and tridecyl trimllitate; epoxy-type plasticizers; and polyester type plasticizers, but the plasticizer is not limited thereto.

The amount of the plasticizer used may be varied according to the intended uses of the resin composition. The amount of the plasticizer used per 100 parts by weight of poly(vinyl chloride) resin is, for example, about 10 parts by weight or less when producing rigid poly(vinyl chloride) resins, about 10 to about 30 parts by weight when producing semi-rigid poly(vinyl chloride) resins, and about 40 to about 120 parts by weight when producing soft poly(vinyl chloride) resins.

Further, if necessary and desired, mold-release agents, pigments, fillers, blowing agents, crosslinking agents, antistatic agents, surface treating agents, lubricants, processing aids, plate-out preventing agents, mildewproofing agents, etc. may be used.

The poly(vinyl chloride) resin composition of the present invention may usually be prepared, for example when obtaining a composition suitable for powder processing, by dry blending a particulate poly(vinyl chloride) resin (component A) produced by suspension polymerization, emulsion polymerization, bulk polymerization, etc. and having a particle diameter of about 100-150 μm with component (B-1) or (B-2) and, according to necessity, various additives as plasticizers, stabilizers, pigments, blowing agents and blowing aids (the first step), and then compounding into the dry blended mixture fine particles of poly(vinyl chloride) resin, calcium carbonate, silica, or the like each having a particle diameter of about 0.1-10 μm (the second step). In this process, the temperature in the dry blending of the first step ranges usually 60-130°C and the temperature in the compounding of the second step ranges usually 40-80°C.

The poly(vinyl chloride) resin composition of the present invention may be employed for various uses and in various methods of processing.

Examples of the use of the resin composition include automobile interior finish, wall paper, artificial leather, floor covering, building materials, marking film, rigid sheets, plates, pipes, and agricultural film.

Examples of the processing method include powder slush processing, powder rotational processing, calendering, extrusion, injection, blow processng, paste processing and casting. In particular, the composition of the present invention is favorably used for powder processing, e.g., powder slush processing and powder rotational processing.

As the result of containing carbonate anion and perchlorate anion in a specific ratio, the poly(vinyl chloride) resin composition of the present invention is good in thermal stability at the time of processing and gives processed products quite good in resistance to amines, in spite of being free from organotin compounds and zinc, cadmium and lead salts of an organic acid. Further, since the composition is free from organotin compounds and organic acid metal salts as described above, it is also good from the viewpoint of hygienic safety.

The present invention is described in more detail below with reference to Examples, but the invention is in no way limited thereto.

Referential Example

Preparation of hydrotalcites treated with perchloric acid

A series of treated hydrotalcites shown in Table 1 were prepared by using DHT-4A (a trade name, mfd. by Kyowa Chemical Co., Ltd., corresponding to the formula shown below wherein a=1 and b=0) as untreated hydrotalcites. For example, treated hydrotalcites designated as "1.8 molar product" was prepared by gradually adding 1.0 mole of the untreated hydrotalcites to a stirred aqueous solution containing 1.8 moles of perchloric acid, followed by filtration and drying.

Examples 1-3 and Comparative Examples 1-5

Preparation of poly(vinyl chloride) resin composition

In a Supermixer (a kind of high speed mixer) was placed 90 parts by weight of a particulate poly(vinyl chloride) resin (Sumilit Sx-8G, mfd. by Sumitomo Chemical Co., Ltd., degree of polymerization: 800) and stirred at

## Table 1

$$Mg^{2+}_{4.5}Al^{3+}_2(OH^-)_{13}(CO_3^{2-})_a(ClO_4^-)_b \bullet 3.5H_2O$$

|  | Untreated | 0.6 molar product | 1.0 molar product | 1.8 molar product | 2.0 molar product |
|---|---|---|---|---|---|
| Molar ratio (a/b) | 1.0/- | 0.7/0.6 | 0.5/1.0 | 0.1/1.8 | -/2.0 |
| Carbonate anion (wt%) | 11.8 | 7.6 | 5.2 | 0.95 | - |
| Perchlorate anion (wt%) | - | 10.9 | 17.2 | 28.3 | 30.8 |

a constant rotational speed with heating. When the resin temperature reached 80°C, 60 parts by weight of trioctyl trimellilate, 2 parts by weight of epoxidized soybean oil (Adekacizer 0-130P, mfd. by Asahi Denka Co., Ltd.), 1.5 parts by weight of titanium dioxide and the stabilizers shown in Table 2 were added thereto and dry blended.

Then, when the temperature of the resulting composition reached 120°C, the composition was cooled to 50°C. Subsequently, 10 parts by weight of a fine particulate poly(vinyl chloride) resin (Sumilit Px-Qx, mfd. by Sumitomo Chemical Co., Ltd., degree of polymerization: 1300) was added to the composition and uniformly dispersed therein to obtain a poly(vinyl chloride) resin powder composition for powder molding.

Preparation of molded sheet

An embossed mold of 3 mm thickness made of nickel was heated on a electric hot plate table set at 240°C. When the mold surface temperature reached 220°C the mold was taken out, and the above-mentioned powder composition was sprinkled over the mold surface and allowed to melt-stick for 10 seconds. Thereafter, unmolten powder was brushed off, the mold was placed again on the hot plate table and heated for 60 seconds to effect melting of the resin, and then the mold was taken out. Then the mold was cooled with water, and the resin was released from the mold to obtain a sheet of about 1 mm thickness.

Separately, a sheet of about 1 mm thickness was obtained in the same manner as described above except for using an electric hot plate set at 270°C and altering the mold surface temperature to 250°C.

Evaluation of thermal stability in processing

The thermal stability in processing was evaluated by measuring the degree of coloration of the sheet obtained above. The degree of coloration was evaluated in 5 grades as specified below in Table 2 by determining $L*$ values from colormetry conducted with a spectrophotometer (Color Eye MS2020 PULS, mfd. by Macbeth Corp.) under conditions of D65 light source and field of view of 10°.

Table 2

| $L*$ value | Evaluation of coloration | |
|---|---|---|
| 100-80 | Virtually no coloration | ◎ |
| 79-70 | Slight coloration | ○ |
| 69-60 | Substantial coloration | × |
| 59-0 | Severe coloration or decomposition | × × |

Evaluation of resistance to amines

The sheet obtained above (at a mold temperature of 220°C) was placed such that the embossing surface faces downside, and an aluminum holding frame (300 mm by 300 mm by 10 mm thick) was set thereon.

A polyol containing a propylene oxide ethylene oxide adduct of glycerol as the main component, water, triethanolamine, triethylenediamine and the like, and a polymeric MDI (NCO content: 80.5%) were mixed in a weight ratio of 100:50 and in amounts to make up the total 150 g with a high speed stirrer for 10 seconds. Then the resulting mixture was poured into the above-mentioned frame and the system was clamped, to effect lamination of a layer of urethane foam onto the backside of the sheet.

The laminated sheet was then cut to a size of 70 mm by 150 mm. Two sheets thus cut out were aged in an oven of 120°C atmosphere for 200 hours and 400 hours, respectively, and were determined for their degree of coloration in the same manner as above. The results obtained are shown in Table 3.

Stabilizers used:

| Kind | Part by weight |
|---|---|
| Treated hydrotalcites (1.8 molar product) | 2.0 |
| Tetra-mixed alkyl($C_{12}$-$C_{15}$)-4,4'-isopropylidenephenyl diphosphite | as shown in Table 3 |
| Metallic stabilizer | as shown in Table 3 |

Table 3

| | Metallic stabilizer (pt by wt) | Phosphite (Pt by wt) | Thermal stability | | Amine resistance | |
|---|---|---|---|---|---|---|
| | | | 220°C | 250°C | 200 hr | 400 hr |
| Example 1 | — | — | ○ | ○ | ○ | ○ |
| Example 2 | — | 0.6 | ◎ | ◎ | ◎ | ○ |
| Example 3 | Ca maleate (1.0) | 0.6 | ◎ | ○ | ◎ | ○ |
| Comp. Example 1 | Ca maleate/Zn benzoate (1.0/0.5) | — | ◎ | ○ | ○ | ×× |
| Comp. Example 2 | Ba maleate/Zn benzoate (0.5/0.5) | — | ◎ | ○ | × | ×× |
| Comp. Example 3 | Ba maleate/Zn benzoate (0.5/1.0) | — | ○ | × | ○ | × |
| Comp. Example 4 | Ba maleate/Zn benzoate (0.5/1.0) | 0.6 | ◎ | ◎ | ○ | × |
| Comp. Example 5 | Zn benzoate (0.5) | 0.6 | ◎ | ◎ Decompo-sition | × | ×× |

Examples 4-5 and Comparative Examples 6-8

The same procedure as in Example 1 was repeated except for replacing the stabilizer by the stabilizers shown below. The results thus obtained are shown in Table 4.

Stabilizers used:

| Kind | Part by weight |
|---|---|
| Treated hydrotalcites (Table 4) | 2 |
| Tetra-mixed alkyl(C$_{12}$-C$_{15}$)-4,4'-isopropylidenephenyl diphosphite | 0.6 |

Table 4

| Treated hydrotalcites | Anion wt ratio* ($ClO_4/CO_3$) | Thermal stability 220°C | Thermal stability 250°C | Amine resistance 200 hr | Amine resistance 400 hr |
|---|---|---|---|---|---|
| Example 4 | 1.0 molar product | 3.3/1 | ◎ | ◎ | ◎ | ○ |
| Example 5 | 1.8 molar product | 30/1 | ◎ | ◎ | ◎ | ○ |
| Comp. Example 6 | 0.6 molar product | 1.4/1 | ○ | ○ | ○ | × |
| Comp. Example 7 | Untreated | 0 | ○ | × | ×× | ×× |
| Comp. Example 8 | 2.0 molar product | ∞ | ◎ Decomposition | | ◎ | ○ |

* in the composition

Example 6-9 and Comparative Example 9-11

The same procedure as in Example 1 was repeated except for replacing the stabilizer by the stabilizers shown below. The results thus obtained are shown in Table 5.

Stabilizers used:

| Kind | Part by weight |
|---|---|
| Hydrotalcites (untreated) | 2 |
| Sodium perchlorate | as shown in Table 5 |
| Tetra-mixed alkyl($C_{12}$-$C_{15}$)-4,4'-isopropylidenephenyyl diphosphite | 0.6 |

Table 5

| | Sodium perchlorate (pt by wt) | Anion wt ratio* (ClO$_4$/CO$_3$) | Thermal stability 220°C | 250°C | Amine resistance 200 hr | 400 hr |
|---|---|---|---|---|---|---|
| Example 6 | 0.6 | 2.0/1 | ◎ | ◎ | ○ | ○ |
| Example 7 | 0.8 | 2.7/1 | ◎ | ◎ | ○ | ○ |
| Example 8 | 1.0 | 3.4/1 | ◎ | ◎ | ○ | ○ |
| Example 9 | 2.0 | 6.8/1 | ◎ | ◎ | ○ | ○ |
| Comp. Example 9 | – | 0 | ○ | × | ×× | ×× |
| Comp. Example 10 | 0.2 | 0.66/1 | ○ | ○ | ○ | × |
| Comp. Example 11 | 0.4 | 1.4/1 | ◎ | ◎ | ○ | × |

\*    in the composition

Examples 10-11 and Comparative Examples 12-15

The same procedure as in Example 1 was repeated except for replacing the stabilizer by the stabilizers shown below. The results thus obtained are shown in Table 6.

Stabilizers used:

| Kind | Part by weight |
|---|---|
| Hydrotalcites (untreated) | as shown in Table 6 |
| Sodium perchlorate | as shown in Table 6 |
| Tetra-mixed alkyl($C_{12}$-$C_{15}$)-4,4'-isopropylidenephenyl diphosphite | 0.6 |

Table 6

| | Hydrotalcites (pt by wt) | NaClO₄ (pt by wt) | Anion wt ratio*2 (ClO₄/CO₃) | Thermal Stability 220°C | Thermal Stability 250°C | Amine resistance 200hr | Amine resistance 400hr |
|---|---|---|---|---|---|---|---|
| Example 10 | 1.0 | 0.4 | 2.7/1 | ◎ | ◎ | ○ | ○ |
| Example 11 | 4.0 | 1.6 | 2.7/1 | ◎ | ◎ | ○ | ○ |
| Comp. Example 12 | 0.5 | 0.1 | 1.4/1 | ◎ | ◎ | × | ×× |
| Comp. Example 13 | 1.0 | 0.2 | 1.4/1 | ◎ | ◎ | ○ | × |
| Comp. Example 14 | 4.0 | 0.8 | 1.4/1 | ◎ | ○ | × | ×× |
| Comp. Example 15 | – | 0.4 | ∞ | Decomposition | Decomposition | *1 | *1 |

Note:

*1 Unmeasurable because sheet cannot be formed

*2 in the composition

Examples 12-22 and Comparative Examples 16-20

The same procedure as in Example 1 was repeated except for replacing the stabilizer by the stabilizers shown below. The results thus obtained are shown in Table 7.

Stabilizers used:

| Kind | Part by weight |
|---|---|
| Treated hydrotalcites (Table 7) | as shown in Table 7 |
| Perchlorate (Table 7) | as shown in Table 7 |
| Tetra-mixed alkyl($C_{12}$-$C_{15}$)-4,4'-isopropylidenephenyl diphosphite | 0.6 |

Table 7

| | Treated hydrotalcites (pt by wt) | Perchlorate (pt by wt) | Anion wt ratio* ($ClO_4/CO_3$) | Thermal stability | | Amine resistance | |
|---|---|---|---|---|---|---|---|
| | | | | 220°C | 250°C | 200hr | 400hr |
| Example 12 | 0.6 molar 2 product | Na 0.05 | 1.7/1 | ◎ | ○ | ○ | ○ |
| Example 13 | 0.6 molar 2 product | Na 0.1 | 2.0/1 | ◎ | ○ | ○ | ○ |
| Example 14 | 0.6 molar 2 product | Na 0.2 | 2.5/1 | ◎ | ○ | ○ | ○ |
| Example 15 | 1.0 molar 2 product | – 0 | 3.3/1 | ◎ | ◎ | ◎ | ○ |
| Example 16 | 0.6 molar 2 product | Na 0.4 | 3.6/1 | ◎ | ◎ | ◎ | ○ |
| Example 17 | 0.6 molar 2 product | Mg 0.36 | 3.6/1 | ◎ | ◎ | ○ | ○ |
| Example 18 | 0.6 molar 2 product | Ba 0.55 | 3.6/1 | ◎ | ◎ | ○ | ○ |

EP 0 668 316 A2

Table 7 (cont'd)

| | | | | | | | | |
|---|---|---|---|---|---|---|---|---|
| Example 19 | 1.0 molar product | 2 | Na 0.2 | 4.5/1 | ◎ | ◎ | ◎ | ○ |
| Example 20 | 1.0 molar product | 2 | Na 0.4 | 6.4/1 | ◎ | ◎ | ◎ | ○ |
| Example 21 | 0.6 molar product | 1 | Na 1 | 12/1 | ◎ | ◎ | ◎ | ○ |
| Example 22 | 0.6 molar product | 1 | Na 2 | 23/1 | ◎ | ○ | ◎ | ○ |
| Comp. Example 16 | 0.6 molar product | 1 | – 0 | 1.4/1 | ◎ | ○ | ◎ | × |
| Comp. Example 17 | 0.6 molar product | 1 | Na 3 | 34/1 | ◎ | Decomposition | ◎ | ○ |
| Comp. Example 18 | 1.8 molar product | 2 | Na 0.1 | 37/1 | ◎ | Decomposition | ◎ | ○ |
| Comp. Example 19 | 1.8 molar product | 2 | Na 0.2 | 41/1 | ◎ | Decomposition | ◎ | ○ |

EP 0 668 316 A2

Table 7 (cont'd)

| | Comp. Example 20 | 1.8 molar product | Na 0.4 | 2 | 50/1 | ◎ Decomposition | ◎ | ○ |
|---|---|---|---|---|---|---|---|---|

* in the composition

Examples 23-28

The same procedure as in Example 1 was repeated except for replacing the stabilizer by the stabilizers shown below. The results thus obtained are shown in Table 8.

Stabilizers used:

| Kind | Part by weight |
|------|----------------|
| Treated hydrotalcites (1.8 molar product) | 2 |
| Tetra-mixed alkyl($C_{12}$-$C_{15}$)-4,4'-isopropylidenephenyl diphosphite | as shown in Table 8 |

Table 8

| | Phosphite | Thermal stability | | Amine resistance | |
|---|---|---|---|---|---|
| | (pt by wt) | 220°C | 250°C | 200 hr | 400 hr |
| Example 23 | 0.01 | ○ | ○ | ○ | ○ |
| Example 24 | 0.05 | ◎ | ○ | ○ | ○ |
| Example 25 | 0.1 | ◎ | ◎ | ○ | ○ |
| Example 26 | 0.3 | ◎ | ◎ | ○ | ○ |
| Example 27 | 0.6 | ◎ | ◎ | ◎ | ○ |
| Example 28 | 1.0 | ◎ | ◎ | ◎ | ○ |

**Claims**

1. A poly(vinyl chloride) resin composition which comprises:
   (A) a poly(vinyl chloride) resin, and
   (B) a component selected from the group consisting of:
      (B-1) hydrotalcites treated with perchloric acid, and
      (B-2) a mixture of at least two compounds selected from the group consisting of hydrotalcites treated with perchloric acid, hydrotalcites untreated with perchloric acid and a perchlorate,
      the weight ratio of the perchlorate anion to the carbonate anion in the composition falling within the range of from 1.6:1 to 30:1, and
      the composition being free from organotin compounds and zinc, cadmium and lead salts of an organic acid.

2. The composition of claim 1, wherein (B) is component (B-1).

3. The composition of claim 1, wherein (B) is component (B-2).

4. The composition of claim 2, wherein the weight ratio of the perchlorate anion to the carbonate anion in component (B-1) falls within the range of from 1.6:1 to 30:1.

5. The composition of claim 3, wherein the weight ratio of the perchlorate anion to the carbonate anion in component (B-2) falls within the range of from 1.6:1 to 30:1.

6. The composition of claim 3, wherein component (B-2) is a mixture of hydrotalcites treated with perchloric acid and hydrotalcites untreated with perchloric acid.

7. The composition of claim 3, wherein component (B-2) is a mixture of a perchlorate and hydrotalcites untreated with perchloric acid.

8. The composition of claim 3, wherein component (B-2) is a mixture of a perchlorate and hydrotalcites treated with perchloric acid.

9. The composition of claim 3, wherein component (B-2) is a mixture of a perchlorate, hydrotalcites treated with perchloric acid and hydrotalcites untreated with perchloric acid.

10. The composition of claim 1, which contains 0.2 to 3 parts by weight of perchlorate anion per 100 parts by weight of the poly(vinyl chloride) resin (A).

11. A method for producing a poly(vinyl chloride) resin composition which comprises the steps of:
    (a) mixing
        (A) a poly(vinyl chloride) resin, and
        (B) a component selected from the group consisting of:
            (B-1) hydrotalcites treated with perchloric acid, and
            (B-2) a mixture of at least two compounds selected from the group consisting of hydrotalcites treated with perchloric acid, hydrotalcites untreated with perchloric acid and a perchlorate, and
    (b) mixing none of organotin compounds and zinc, cadmium and lead salts of an organic acid.

12. The method of claim 11, wherein step (a) includes the step of selecting component (B-1) as (B).

13. The method of claim 11, wherein step (a) includes the step of selecting component (B-2) as (B).

14. The method of claim 12, wherein step (a) further includes the step of selecting the weight ratio of the perchlorate anion to the carbonate anion in component (B-1) so that it falls within the range of from 1.6:1 to 30:1.

15. The method of claim 13, wherein step (a) further includes the step of selecting the weight ratio of the perchlorate anion to the carbonate anion in component (B-2) so that it falls within the range of from 1.6:1 to 30:1.

16. The method of claim 11, wherein step (a) includes the step of controlling the content of the perchlorate anion in the poly(vinyl chloride) resin composition so that it falls within the range of from 0.2 to 3 parts by weight per 100 parts by weight of the poly(vinyl chloride) resin (A).